Europäisches Patentamt

European Patent Office

Office européen des brevets

(11) Veröffentlichungsnummer: **0 297 158**

**A1**

(12) **EUROPÄISCHE PATENTANMELDUNG**

(21) Anmeldenummer: **87109459.5**

(22) Anmeldetag: **01.07.87**

(51) Int. Cl.⁴: **B29C 67/22**

(43) Veröffentlichungstag der Anmeldung:
**04.01.89 Patentblatt 89/01**

(84) Benannte Vertragsstaaten:
**AT BE CH DE ES FR GB GR IT LI LU NL SE**

(71) Anmelder: **Battenfeld GmbH**
**Scherl 10**
**D-5882 Meinerzhagen(DE)**

(72) Erfinder: **Eckardt, Helmut**
**Goethestrasse 18**
**D-5882 Meinerzhagen 1(DE)**
Erfinder: **Ehritt, Jürgen**
**Auf der Platte 3**
**D-5912 Hilchenbach-Müsen(DE)**

(74) Vertreter: **Müller, Gerd et al**
**Patentanwälte**
**HEMMERICH-MÜLLER-GROSSE-POLLMEIER--**
**MEY Hammerstrasse 2**
**D-5900 Siegen 1(DE)**

(54) Verfahren zum Herstellen von Mehrschicht-Formkörpern aus thermoplastischem Kunststoffmaterial.

(57) Es wird ein Verfahren zum Herstellen von Mehrschicht-Formkörpern mit einer Außenhaut aus kompaktem thermoplastischem Kunststoffmaterial und einem Kern aus geschäumtem thermoplastischem Kunststoffmaterial vorgeschlagen, bei welchem zunächst das Hautmaterial in einer für die gewünschte Haut-Schichtdicke ausreichenden Menge in den Formhohlraum gebracht und daran anschließend das mit einem Treibmittel versetzte Kernmaterial in diesen Formhohlraum nachgeführt wird.

Damit eine einwandfreie Ausformung der Formkörper auch bei beträchtlich vermninderter Dichte ihres Kernbereichs und einer daraus resultierenden Gewichtsverminderung gewährleistet bleibt, wird das mit Treibmittel versetzte Kernmaterial B während und/oder nach seinem Einführen in den Formhohlraum 4 kurzzeitig durch ein Zusatzgas C unter einen den Gasdruck des Treibmittels übersteigenden Wirkdruck gesetzt und anschließend das Zusatzgas C wieder aus dem sowohl vom Hautmaterial A als auch vom Kernmaterial B freien Hohlraum abgezogen, so daß in diesem nunmehr das Kernmaterial B nach innen aufschäumen kann.

Fig. 5

## Verfahren zum Herstellen von Mehrschicht-Formkörpern aus thermoplastischem Kunststoffmaterial

Die Erfindung betrifft ein Verfahren zum Herstellen von Mehrschicht-Formkörpern mit einer Außenhaut aus kompaktem thermoplastischem Kunststoffmaterial und einem Kern aus geschäumtem thermoplastischem Kunmststoffmaterial, bei welchem zunächst das Hautmaterial in einer für die gewünschte Haut-Schichtdicke ausreichenden Menge in den Formhohlraum gebracht und daran anschließend das mit einem Treibmittel versetzte Kernmaterial in den Formhohlraum nachgeführt wird.

Bei einem bekannten Herstellungsverfahren dieser Art (GB-PS 1 303 5l7) wird zunächst eine bestimmte Menge thermoplastischen Kunststoffmaterials zur Hautbildung in einen Formhohlraum eingespritzt. Daraufhin wird dann das mit einem Treibmittel versetzte, thermoplastische Kunststoffmaterial zur Kernbildung nachgeführt, und zwar in solcher Menge, daß es den von Hautmaterial noch nicht beanspruchten, vorhandenen Formhohlraum vollständig ausfüllt. Unmittelbar hiernach wird dann eine Volumensvergrößerung des Formhohlraums bewirkt, so daß das zuletzt zugeführte, thermoplastische Kunststoffmaterial unter der Wirkung des in ihm enthaltenen Treibmittels aufschäumen kann und dabei mit einem Teil des Hautmaterials in das zusätzlich freigewordene Volumen des Formhohlraums hineindrängt, um diesen auszufüllen.

Dieses bekannte Herstellungsverfahren kann nur unter Benutzung sogenannter atmender Werkzeuge ausgeübt werden, die einen hohen Herstellungs- und Erhaltungsaufwand erfordern. Nachteilig bei diesem bekannten Verfahren ist aber auch, daß die hiernach hergestellten Formteile ein relativ hohes Fertiggewicht aufweisen, weil zur Sicherstellung ihrer einwandfreien Ausformung das schäumbare bzw. mit Treibmittel versetzte Kernmaterial in relativ großer Menge benötigt wird, um einen genügend großen Innendruck hervorzubringen. Dieser ist aber nur dann erreichbar, wenn ein zu starkes Aufschäumen des Kernmaterials verhütet wird.

Bekannt ist es auch schon, Formteile lediglich aus einem mit Treibmittel versetzten Kunststoffmaterial zu fertigen. Hiernach wird das mit dem Treibmittel versetzte Kunststoffmaterial gegen eine Gasdruck in den Formhohlraum eingefüllt, welcher höher liegt, als der vom Treibmittel erzeugbare Druck. Anschließend wird dann zusätzlich noch Gas in den Formhohlraum eingeführt, um das Kunststoffmaterial gleichmäßig entlang den Wandungen des gesamten Formhohlraumes zu verteilen. Schließlich wird dann eine Druckentspannung des im Formhohlraum befindlichen Gases herbeigeführt, so daß durch das Treibmittel ein Aufschäumen des Kunststoffmaterials nach innen hin eintritt und damit der zuvor durch das Einbringen des Gases entstandene Hohlraum sich vollständig mit Schaumstruktur füllt.

Nachteilig bei diesem bekannten Verfahren ist, daß nur mit gut abgedichteten Formwerkzeugen gearbeitet werden kann, die einen hohen Herstellungs- und Erhaltungsaufwand erfordern.

Zum Stand der Technik gehört schließlich auch noch ein Herstellungsverfahren für Kunststoff-Formteile, bei dem ein Kunststoffmaterial ohne Treibmittel in den Formhohlraum eingeführt und durch nachfolgendes Einbringen eines Gases zur Anlage an den Formwandungen gebracht wird. Durch plötzliche Druckentlastung des Gases erfolgt dann eine teilweise Verbindung der im Inneren noch - schmelzflüssigen Kunststoffmasse zu einer sogenannten Webstruktur. Hierbei bilden sich im Inneren der Formteile relativ große Hohlräume aus, die in unregelmäßiger Verteilung von Stegen durchzogen sind.

Die Bildung der Stege innerhalb der Formteile ist hier nur zufällig; d. h., die Reproduzierbarkeit der inneren Struktur für die Formteile ist hier äußerst gering.

Bekannt ist aber auch noch die Herstellung von Formteilen nach dem sogenannten Gasinjektions-Verfahren. Auch hier wird das schmelzflüssige Kunststoffmaterial ohne Treibmittel in den Formhohlraum eingespritzt und anschließend mit Hilfe eines Gases vollständig an dessen Wandungen zur Anlage gebracht. Es ergeben sich dabei Formteile, die insgesamt große Hohlräume enthalten.

Die nach diesem Verfahren hergestellten Formteile können im Gebrauch nicht hoch belastet werden, weil sie durch das Vorhandensein der großen Hohlräume leicht versagen.

Der Erfindung liegt die Aufgabe zugrunde, die Herstellung von Formkörpern mit einer kompakten Hautschicht und einem geschäumtem Kern zu ermöglichen, die trotz Erzielung erheblicher Dichtereduzierungen in ihrem Kernbereich eine ein wandfreie Ausbildung des Haut- bzw. Oberflächenbereichs gewährleisten und darüber hinaus eine verminderte Verweilzeit in der Spritzform erfordern.

Gelöst wird diese Aufgabe erfindungsgemäß - nach dem Kennzeichen des Anspruchs l - dadurch, daß das mit Treibmittel versetzte Kernmaterial während und/oder nach seinem Einführen in den Formhohlraum kurzzeitig durch ein Zusatzgas unter einen den Gasdruck des Treibmittels übersteigenden Wirkdruck gesetzt und anschließend das Zusatzgas wieder aus dem noch vom Haut- und Kernmaterial freien Hohlraum abgezogen wird.

Der Vorteil dieser erfindungsgemäßen Verfahrensart liegt darin, daß am fertigen Formteil die Dichte des ausgeschäumten Kernmaterial innerhalb weiter Grenzen variiert werden kann, ohne daß hierdurch eine Beeinträchtigung der Oberflächen- bzw. Hautqualität an diesem Formteil eintritt.

Gegenüber den herkömmlichen Herstellungsverfahren für Mehrschicht-Formkörper lassen sich dabei Dichtereduzierungen erreichen, die zwischen 10 und 50% liegen können und dadurch entsprechende Material- und Gewichtseinsparungen ermöglichen. Auch hat sich gezeigt, daß bei Anwendung der erfindungsgemäßen Verfahrensart eine schnellere Entformung der fertiggespritzten Formkörper vorgenommen werden kann, weil sich hiernach im Kernmaterial beträchtlich verminderte Gasrestdrücke einstellen und daher die Formhaltung der fertigen Formteile nicht mehr beeinträchtigen können. Die Verweilzeiten der Formteile in den Spritzwerkzeugen lassen sich gegenüber den herkömmlichen Herstellungsverfahren in einer Größenordnung von 10% und mehr verringern.

Erfindungsgemäß ist - nach Anspruch 2 - die Möglichkeit gegeben, daß das Zusatzgas schon vor Beendigung der Kernmaterial-Zufuhr, also mit dieser zeitlich überlappt, in den Formhohlraum geleitet wird.

Wichtig ist es aber ferner, daß - gemäß Anspruch 3 - das Zusatzgas über einen Zeitraum von mehreren Sekunden im Formhohlraum belassen wird. Dabei kann der Druck des Zusatzgases - nach Anspruch 4 - über den gesamten Verweilzeitraum im Formhohlraum auf gleicher Höhe gehalten werden. Es ist aber auch - nach Anspruch 5 - möglich, daß der Druck des Zusatzgases nach einer gewissen Verweilzeit im Formhohlraum kontinuierlich oder stufenweise abgebaut wird.

Eine weitere Verfahrenart wird erfindungsgemäße - nach Anspruch 6 - darin gesehen, daß zusammen mit dem Zusatzgas oder anstelle des Zusatzgases eine unter Druck stehende, niedrig siedende Flüssigkeit in den Formhohlraum gebracht werden kann.

Bei der Nutzung des erfindungsgemäßen Verfahrens wird zunächst eine - vornehmlich durch die gewünschte Haut-Schichtdicke des Formteils bestimmte - Menge eines kompakten, thermoplastischen Kunststoffmaterials in den Formhohlraum eingespritzt. Mit oder ohne zeitliche Überlappung erfolgt dann die Einspritzung des mit einem Treibmittel versetzten, schäumfähigen Kunststoffmaterials, und zwar mit einer innerhalb gewisser Grenzen variierbaren Menge, die für die später zu erreichende Schaumstruktur des Kernmaterials bestimmend ist. Zeitüberlappt mit oder unmittelbar nach dem Einspritzen des zur Kernbildung dienenden thermoplastischen Kunststoffmaterials erfolgt nun das Einspritzen des unter erhöhtem Druck stehenden Zusatzgases und/oder der niedrig siedenden Flüssigkeit in den Formhohlraum. Es wird hierdurch in dem zur Kernbildung dienenden, mit Treibmittel versetzten Kunststoffmaterial ein Hohlraum gebildet, welcher dazu führt, daß durch den im Verhältnis zum Druck des Treibmittels höheren Druck des Zusatzgases bzw. der Flüssigkeit eine gute Ausspritzung des Formteils innerhalb des Formhohlraums herbeigeführt wird. Die vollständige Füllung des Formteils wird insbesondere zum Erreichen niederer Dichten erst durch das Einspritzen des Zusatzgases bzw. der Flüssigkeit bewirkt. Sobald nun - nach einigen Sekunden Verweilzeit - der Gasdruck des Zusatzgases bwz. der Flüssigkeit abgebaut wird, bewirkt das Treibmittel in dem zur Kernbildung dienenden Kunststoffmaterial, daß dieses nach innen aufschäumt und damit den zuvor vom Zusatzgas bzw. von der Flüssigkeit gebildeten Hohlraum vollständig ausschäumt. Es ergeben sich hierdurch Formkörper, die eine kompakte Oberfläche in Spritzgußqualität aufweisen, aber einen leichten Schaumkern erhalten welcher eine sehr gleichmäßige Schaumstruktur hat und keine anderen Hohlräume enthält, wodurch eine frühere Entformung möglich ist.

Als Folge des Aufschäumens in den zuvor vom Zusatzgas bzw. von der Flüssigkeit freigehaltenen Hohlraum vermindert sich der Gasrestdruck im Kernmaterial ganz beträchtlich.

Außer den möglichen, hochprozentigen Dichtereduzierungen im Kernbereich der Formkörper und der Verminderung der Verweilzeit für die fertigen Formkörper im Spritzwerkzeug stellen sich erfindungsgemäß noch weitere Vorteile ein. So weisen die Formkörper keinerlei Hohlräume auf, weil nach der Druckentspannung des Zusatzgases bzw. der Flüssigkeit das Kernmaterial überall gleichmäßig nach innen aufschäumen kann und dadurch zu einer hohen Formsteifigkeit und -festigkeit führt.

Auch bei komplizierten Formkörpern mit erheblichen Wanddikkenunterschieden wird nach dem erfindungsgemäßen Verfahren über den gesamten Querschnittsbereich hinweg eine sehr gleichmäßige Gewichtsreduzierung herbeigeführt.

Schließlich tritt durch das erfindungsgemäß gleichmäßig erfolgende Aufschäumen des Kernmaterials nach innen ein Spannungsabbau ein, so daß die fertiggestellten Formkörper nur sehr geringe, eingefrorene Spannungen aufweisen können.

Das erfindungsgemäße Verfahren ist unabhängig davon benutzbar, ob das zur Kernbildung dienende, thermoplastische Kunststoffmaterial mit einem chemischen Treibmittel oder aber einem physikalischen Treibmittel zum Aufschäumen versetzt wird.

Durch Benutzung chemischer Treibmittel ergibt sich eine einfache Anwendung, weil dieses dem Granulat vor dem Eintritt in die Schnecke des Plastifizierungsextruders zugegeben werden kann.

Flüssiges oder gasförmiges physikalisches Treibmittel läßt sich im Arbeitsbereich der Schnecke des Plastifizierungsextruders einspritzen. Es hat gegenüber chemischen Treibmitteln der Vorteil, daß es die Erzeugung höherer Treibgasdrükke bewirkt und dadurch zu einer höheren Expansion des aufschäumenden Kernmaterials führen kann. Es lassen sich damit dann geringere Dichten im endgültig aufgeschäumten Kernmaterial herbeiführen. Anstelle des Gases, das als dritte Komponente eingespritzt wird - oder zusammen mit diesem -kann ebenfalls eine Flüssigkeit unter entsprechend hohem Druck, der den Gasdruck des treibmittelhaltigen Kernmaterials übersteigt, eingespritzt werden. Durch Wahl unterschiedlicher Flüssigkeiten können weitere Vorteile erzielt werden.

Werden flüssige Treibmittel, wie z.B. Fluorkohlenwasserstoffe, verwendet, dann kommt es bei plötzlicher Druckentspannung nach der Druckentlastung des eingespritzten Zusatzgases auch zur plötzlichen Expansion desselben und in Folge hiermit zu einer plötzlichen Temperaturabsenkung - Kältemitteleffekt -. Die Abkühlzeiten für die Formkörper können hierdurch günstig beeinflußt werden, d.h., die Verweilzeit der Formkörper in der Spritzform läßt sich weiter vermindern. Ebenfalls kann z.B. Stickstoff in flüssiger Form eingespritzt werden.

Anhand einer Zeichnung wird die Erfindung nachfolgend erläutert. Es zeigen

Figur I in schematisch vereinfachter Darstellung den Querschnitt eines Formhohlraums in einem Spritzwerkzeug mit zwei in diesen eingeführten, unterschiedlichen thermoplastischen Kunststoffmaterialien in einer durch Einbringen eines Zusatzgases bewirkten Verteilung,

Figur 2 eine der Fig. I entsprechende Darstellung, jedoch nach Abziehen des Zusatzgases aus dem Formhohlraum mit einer hieraus resultierenden, geänderten Verteilung des als Formteil-Kern wirkenden Kunststoffmaterials.

Figur 3 eine der Fig. I ähnliche Darstellung, jedoch mit anderer Einspritzlage der beiden unterschiedlichen Kunststoffmaterialien innerhalb des Formhohlraums,

Figur 4 eine der Fig. 2 ähnliche Darstellung bei im Formhohlraum fertiggestelltem Formkörper.

Figur 5 die den Fig. I und 3 entsprechenden Verhältnisse bei einem im Querschnitt unsymmetrischen Formkörper,

Figur 6 die den Fig. 2 und 4 entsprechenden Verhältnisse bei einem im Querschnitt unsymmetrischen Formkörper und

Figur 7 ein Zeitdiagramm für einen bei der Herstellung der Formkörper genutzten Verfahrensablauf.

Die in der Zeichnung dargestellten Spritzwerkzeuge I weisen jeweils zwei Formhälften 2 und 3 auf, die relativ zueinander geöffnet und geschlossen werden können. In geschlossenem Zustand der beiden Formhälften 2 und 3 bzw. des Spritzwerkzeuges I wird von diesen bzw. diesem ein Formhohlraum 4 eingeschlossen, der durch mindestens einen sogenannten Angußkanal 5 mit thermoplastischem Kunststoffmaterial beschickt werden kann.

Nach den Fig. I, 3 und 5 der Zeichnung wird zunächst durch den Angußkanal 5 ein kompaktes thermoplastisches Kunststoffmaterial A in den Formhohlraum 4 eingespritzt, und zwar in solcher Art und Weise, daß es sich mit einer möglichst gleichmäßigen Schichtdicke unmittelbar entlang der den Formhohlraum 4 begrenzenden Wandungen des Spritzwerkzeuges verteilt.

Anschließend wird durch den Angußkanal 5 in den Formhohlraum ein anderes thermoplastisches Kunststoffmaterial B eingespritzt, welches mit einem chemischen oder physikalischen Treibmittel versetzt ist.

Unmittelbar nach oder aber zeitlich überlappt mit dem Einspritzen des Kunststoffmaterials B wird durch den Angußkanal 5 in den Formhohlraum 4 ein Zusatzgas C eingepreßt, und zwar mit einem Wirkdruck, welcher den Gasdruck im Treibmittel des Kunststoffmaterials B deutlich übersteigt.

Anstelle des Zusatzgases C oder gegebenenfalls auch zusammen mit diesem kann in den Formhohlraum 4 auch eine unter entsprechendem Druck stehende, niedrig siedende Flüssigkeit, wie bspw. Fluorkohlenwasserstoff, eingepreßt werden.

Durch das Zusatzgas C und/oder die Flüssigkeit wird innerhalb des Formhohlraums 4 das thermoplastische Kunststoffmaterial B entlang der bereits gebildeten Hautschicht aus dem Kunststoffmaterial A verteilt, wobei der Kernbereich des Formhohlraums 4 durch eine Gasblase und/oder die Flüssigkeitsfüllung von dem Kunststoffmaterial B freigehalten wird.

Nachdem sich das thermoplastische Kunststoffmaterial B in der aus den Fig. I, 3 und 5 erkennbaren Art und Weise verteilt hat, was spätestens einige Sekunden nach Beendigung seines Einspritzens der Fall ist, wird nun der Druck des Zusatzgases C im Kernbereich des Formhohlraums 4 abgebaut und/oder die niedrig siedende Flüssigkeit hieraus abgezogen.

Dabei kann der Druckabbau des Zusatzgases C und/oder das Abziehen die Flüssigkeit den jeweiligen Bedürfnissen entsprechend entweder kontinuierlich oder aber stufenweise vorgenommen werden.

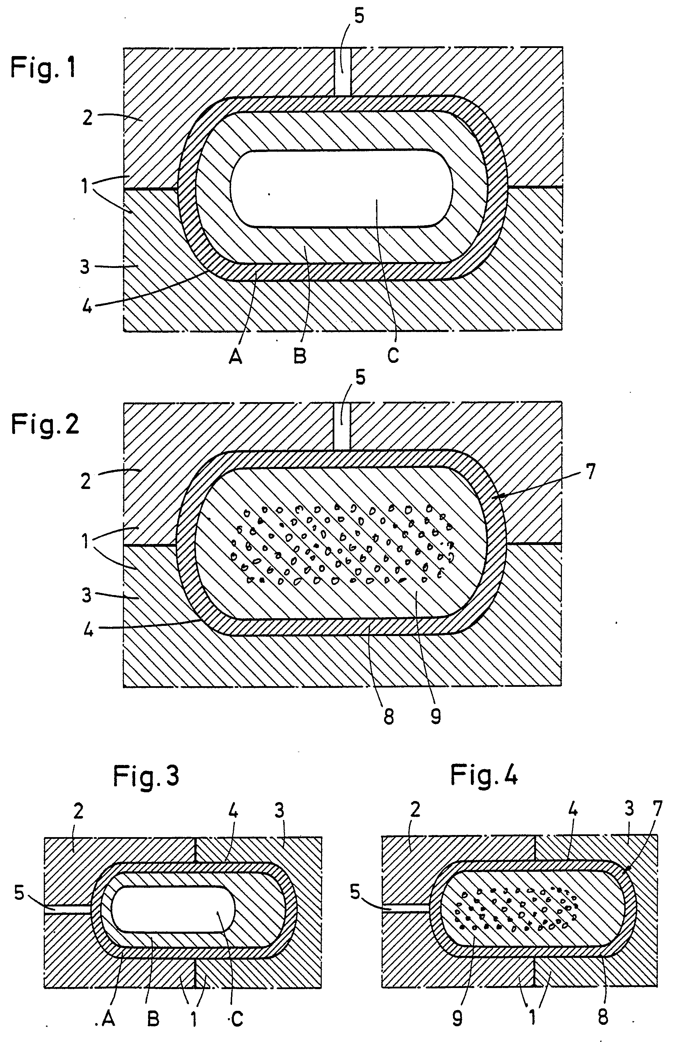

Unter der Einwirkung des Treibmittels expandiert nunmehr das thermoplastische Kunststoffmaterial B in den freiwerdenden bzw. freigemachten Kernbereich des Formhohlraums 4 hinein und füllt diesen gleichmäßig mit einer Schaumstruktur aus, wie dies in den Fig 2, 4 und 6 der Zeichnung zu sehen ist. Es entsteht dadurch ein Formkörper 7, der eine kompakte Hautschicht 8 hat, die aus dem Kunststoffmaterial A besteht, und welche einen geschäumten Kern 9 enthält, der aus dem Kunststoffmaterial B entstanden ist. Die Dichte der Schaumstruktur im Kern 9 des Formkörpers 7 wird durch die Menge des thermoplastischen Kunststoffmaterials B bestimmt, welche zuvor in den Formhohlraum 4 des Spritzwerkzeuges I durch den Angußkanal 5 hineingepreßt worden ist. Bei relativ großer Menge des das Treibmittel enthaltenden Kunststoffmaterials B ergibt sich eine entsprechend hohe Dichte der Schaumstruktur innerhalb des Kernteils 9, während eine nur kleine Menge des eingespritzten Kunststoffmaterials B zu einer entsprechend geringeren Dichte der Schaumstruktur im Kernteil 9 des Formkörpers 7 führt.

Ein Vergleich der Fig. I und 3 der Zeichnung läßt erkennen, daß durch Variation der relativen Lage des Angußkanals 5 zum Formhohlraum 4 des Spritzwerkzeugs I insbesondere die Art der Verteilung des thermoplastischen Kunststoffmaterials B innerhalb des Formhohlraums 4 beeinflußt werden kann, in dem sich eine andere Lage der aus dem Zusatzgas C bestehenden Gasblase innerhalb des Kunststoffmaterials B einstellt.

Andererseits macht aber ein Vergleich der Fig. 2 und 4 deutlich, daß trotzdem am fertiggestellten Formkörper 7 eine gleichmäßige Schaumstruktur im Kernteil 9 des Formkörpers 7 erreicht wird.

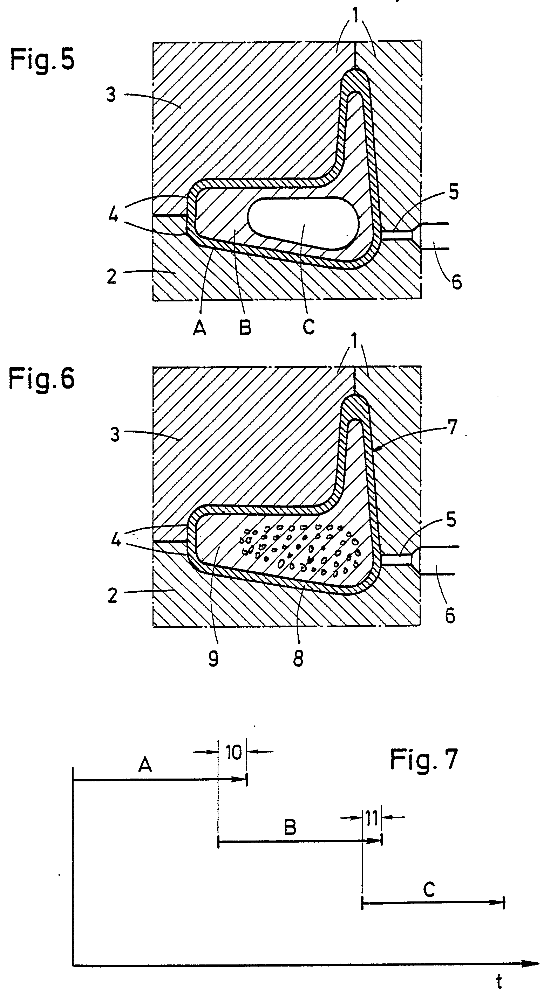

Den Fig. 5 und 6 der Zeichnung ist zu entnehmen, daß auch Formteile mit relativ kompliziertem Querschnitt und unterschiedlichen Wanddicken den verschiedenen Querschnittsbereichen leicht und sicher nach der vorstehend erläuterten Verfahrensart hergestellt werden können.

In Fig. 7 der Zeichnung ist angedeutet, in welcher zeitlichen Aufeinanderfolge einerseits die beiden themoplastischen Kunststoffmaterialien A und B und andererseits das Zusatzgas C und/oder die niedrig siedende Flüssigkeit in den Formhohlraum des Spritzwerkzeugs I eingespritzt werden können.

Aus Fig. 7 ergibt sich dabei bspw., daß das mit dem Treibmittel versetzte thermoplastische Kunststoffmaterial B um den Zeitabschnitt l0 überlappt mit dem thermoplastischen Kunststoffmaterial A zur Hautbildung eingespritzt werden kann. Andererseits macht Fig. 7 aber auch deutlich, daß das Zusatzgas C und/oder die niedrig siedende Flüssigkeit sich ebenfalls zeitlich überlappt, nämlich während des Zeitabschnitts ll gemeinsam mit dem thermoplastischen Kunststoffmaterial B in den Formhohlraum 4 des Spritzwerkzeuges I einspritzen läßt. Die Überlappungs-Zeitabschnitte l0 und ll können dabei auf unterschiedliche Bedürfnisse abgestimmt werden, wie das ein Vergleich der Zeitabschnitte l0 und ll erkennen läßt. Die Verfahrensart läßt sich aber auch so ausüben, daß sich keine Überlappungszeitabschnitte l0 und/oder ll einstellen, sondern die verschiedenen Zuführphasen sich zeitlich unmittelbar aneinanderreihen.

In Fig. 5 der Zeichnung ist noch zu sehen, daß bei Formteilen mit unterschiedlichen Wanddicken das Zusatzgas C in beträchtlichem Maß in den Querschnittsbereich mit der größeren Wanddicke eindringt und die dort entstehende Gasblase einen mehr oder minder ausgeprägten Hohlraum schafft. Dieser Hohlraum wird jedoch, wie die Fig. 6 verdeutlicht durch das Aufschäumen des thermoplastischen Kunststoffmaterials B völlig eliminiert, wobei sich die Schaumstruktur des Kernteils 9 gleichmäßig über den Gesamtquerschnitt verteilt und damit dem Formkörper 7 über seinen Gesamtquerschnitt auch gleichmäßige Eigenschaften verleiht.

Wird gemeinsam mit dem Zusatzgas C oder anstelle desselben zur zeitweiligen Bildung des Hohlraums eine niedrig siedende Flüssigkeit, bspw. Fluorkohlenwasserstoff, in den Formhohlraum 4 des Spritzwerkzeuges I eingepreßt und diese dann zur gegebenen Zeit plötzlich wieder abgezogen oder entspannt, dann wird hierdurch den im Spritzwerzeug I befindlichen Kunststoffmaterialien A und B in großem Umfang Wärme entzogen. Es stellt sich somit ein zusätzlicher Kühleffekt ein, welcher es möglich macht, die Verweilzeiten für die Formkörper 7 im Spritzwerkzeug I in beträchtlichem Maße zu verringern. Die Arbeitszyklen für die Herstellung der Formkörper werden hierdurch entsprechend verkürzt und damit die Produktivität der Spritzgießmaschinen erhöht.

Das zur Bildung der Hautschicht 8 dienende kompakte, thermoplastische Kunststoffmaterial A, das zur Bildung des Kernteils 9 benutzte, mit Treibmittel versetzte, thermoplastische Kunststoffmaterial B sowie das Zusatzgas C und/oder auch die niedrig siedende Flüssigkeit können durch einen an den Anspritzkanal 5 angesetzten Spritzkopf 6 in den Formhohlraum 4 des Spritzwerkzeuges I eingespritzt werden, der eine Bauart aufweist, wie sie ausführlich in der Patentanmeldung P 36 32 928.2 der Anmelderin beschrieben ist.

## Ansprüche

1. Verfahren zum Herstellen von Mehrschicht-Formkörpern mit einer Außenhaut aus kompaktem thermoplastischem Kunststoffmaterial und einem Kern aus geschäumtem thermoplastischem Kunststoffmaterial, bei welchem zunächst das Hautmaterial in einer für die gewünschte Haut-Schichtdicke ausreichenden Menge in den Formhohlraum gebracht und daran anschließend das mit einem Treibmittel versetzte Kernmaterial in den Formhohlraum nachgeführt wird,

**dadurch gekennzeichnet,**

daß das mit Treibmittel versetzte Kernmaterial (B) während und/oder nach seinem Einführen (5, 6) in den Formhohlraum (4) kurzzeitig durch ein Zusatzgas (C) unter einen den Gasdruck des Treibmittels übersteigenden Wirkdruck gesetzt und anschließend das Zusatzgas (C) wieder aus dem noch vom Hautmaterial (A) und vom Kernmaterial (B) freien Hohlraum abgezogen wird.

2. Verfahren nach Anspruch I,

**dadurch gekennzeichnet,**

daß das Zusatzgas (C) schon vor Beendigung der Zufuhr des Kernmaterials (B), also mit dieser zeitlich überlappt (II), in den Formhohlraum (4) geleitet wird (Fig. 7).

3. Verfahren nach einem der Ansprüche I und 2,

**dadurch gekennzeichnet,**

daß das Zusatzgas (C) über einen Zeitraum von mehreren Sekunden im Formhohlraum (4) unter Bildung einer Gasblase (Fig. I, 3 und 5) belassen wird.

4. Verfahren nach einem der Ansprüche I bis 3,

**dadurch gekennzeichnet,**

daß der Druck des Zusatzgases (C) über den gesamten Verweilzeitraum im Formhohlraum (4) auf gleicher Höhe gehalten wird.

5. Verfahren nach einem der Ansprüche I bis 3,

**dadurch gekennzeichnet,**

daß der Druck des Zusatzgases (C) nach einer gewissen Verweilzeit im Formhohlraum (4) kontinuierlich oder stufenweise abgebaut wird.

6. Verfahren nach einem der Ansprüche I bis 5,

**dadurch gekennzeichnet,**

daß zusammen mit dem Zusatzgas (C) oder anstelle des Zusatzgases (C) eine unter Druck stehende, niedrig siedende Flüssigkeit in den Formhohlraum (4) gebracht wird.

Fig. 1

Fig. 2

Fig. 3

Fig. 4

61316
27.6.87

**Fig.5**

**Fig.6**

**Fig. 7**

# EUROPÄISCHER RECHERCHENBERICHT

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 800 482 (ASAHI-DOW) <br> * Figur 13; Seiten 26-27; Ansprüche * <br> --- | 1-6 | B 29 C 67/22 |
| X | US-A-4 129 635 (ASAHI-DOW) <br> * Figur 2; Spalten 4,5 * <br> --- | 1-5 | |
| X | DE-A-2 651 665 (SCHLOEMANN-SIEMAG) <br> * Seite 6 * <br> ----- | 1-5 | |

RECHERCHIERTE
SACHGEBIETE (Int. Cl.4)

B 29 C

Der vorliegende Recherchenbericht wurde für alle Patentansprüche erstellt

| Recherchenort | Abschlußdatum der Recherche | Prüfer |
|---|---|---|
| DEN HAAG | 10-03-1988 | KUSARDY R. |